# FASCICULE DE BREVET EUROPEEN

(11) **EP 1 922 218 B1**
(45) Date de publication et mention de la délivrance du brevet: **30.03.2011**
(21) Numéro de dépôt: 06808080.3
(22) Date de dépôt: 06.09.2006
(51) Int. Cl.: B60H 1/00

(54) **CONDUIT DE TRAVERSE AERAULIQUE ET ROCEDE DE FABRICATION D'UNE TRAVERSE AERAULIQUE**
LÜFTUNGSQUERGLIEDKANAL UND VERFAHREN ZUR HERSTELLUNG EINES LÜFTUNGSQUERGLIEDS
VENTILATING CROSS-MEMBER DUCT AND METHOD FOR MAKING A VENTILATING CROSS-MEMBER

(30) Priorité: 06.09.2005 FR 0509092; 23.11.2005 FR 0511865
(43) Date de publication de la demande: 21.05.2008
(73) Titulaire: Faurecia Interieur Industrie, 92000 Nanterre (FR)
(72) Inventeur: BAUDOUIN, Ivan, F-93600 Aulnay sous Bois (FR); BRANCHERIAU, Christian, F-95220 Herblay (FR); DESCAMPS, Albin, F-27140 Gisors (FR); DEVOULON, Thierry, F-92250 La Garenne Colombes (FR); RUMIGNY, Pascal, F-60530 Crouy en Thelle (FR)
(74) Mandataire: Domenego, Bertrand
(86) Numéro de dépôt international: PCT/FR2006/002053
(87) Numéro de publication internationale: WO 2007/028895

(56) Documents cités:
- DE-A1- 4 232 847
- DE-A1- 19 747 646
- US-A1- 2005 072 554
- US-B1- 6 857 955

## Description

La présente invention concerne un conduit destiné à une traverse aéraulique d'automobile, ainsi qu'un procédé de fabrication d'une traverse aéraulique.

La partie avant du compartiment des passagers d'une automobile comporte le plus souvent un cockpit formé d'une traverse et d'une planche de bord. La traverse a une fonction mécanique puisqu'elle assure la rigidité de la carrosserie. Cependant, il est aussi souhaitable qu'elle remplisse d'autres fonctions, notamment celles du guidage de l'air de conditionnement vers le compartiment des passagers.

On sait qu'il n'est pas souhaitable de faire circuler l'air de conditionnement directement dans une poutre métallique d'une traverse car le métal dont est constituée la traverse ou une partie au moins de celle-ci est un bon conducteur de la chaleur et provoque donc une déperdition considérable de chaleur de conditionnement. On associe donc en général à une traverse métallique des conduits pour la formation d'une traverse dite "aéraulique" qui comporte, dans au moins un canal formé par un profilé métallique de la traverse aéraulique, un conduit formé en général d'une matière plastique qui est un mauvais conducteur de la chaleur.

Ainsi, le document EP-662 901 décrit une planche de bord ayant une traverse dont les parties latérales sont formés de deux tronçons rectilignes de tube de section rectangulaire. Chaque tronçon a, près de son extrémité externe, une ouverture latérale. Un conduit de matière plastique souple est placé dans chaque tronçon, entre l'ouverture latérale de celui-ci et son extrémité centrale. Un soufflet permet un déplacement axial de l'extrémité interne du conduit afin que celle-ci puisse être raccordée à un embout d'appareil de conditionnement d'air. Ainsi, la partie de conduit placée dans la traverse a une sortie latérale et forme un trajet courbe, mais non sinueux. L'insertion du conduit dans son tronçon de traverse s'effectue par une compression limitée d'une seule saillie à une extrémité du conduit. Pendant son insertion et après celle-ci, la partie de conduit introduite dans le tronçon a pratiquement un volume toujours congruent de celui du tronçon.

Comme la poutre métallique de la traverse aéraulique a essentiellement une fonction mécanique, elle doit posséder diverses propriétés qui ne sont pas particulièrement bien adaptées au logement d'un conduit. Ainsi, il arrive que, lorsque la poutre métallique a subi la totalité des opérations de soudage nécessaires, le conduit doive occuper un espace très sinueux si bien que la mise en place du conduit est difficile ou impossible.

Bien entendu, à la conception de la poutre métallique, on essaie de dégager au mieux l'espace destiné à de tels conduits. Cependant, il est fréquent que des conduits doivent être incorporés à des volumes dans lesquels ils suivent des trajets sinueux, c'est-à-dire présentant une suite de courbes dans des sens différents. Pour que la section de passage du conduit ne soit pas trop restreinte, il est souhaitable que le conduit occupe la plus grande partie du volume délimité dans la poutre.

Si le conduit est rigide, il n'est pas possible de l'insérer dans la poutre à cause de sa forme sinueuse et du volume important qu'il occupe à l'intérieur de la poutre.

Une solution utilisée de manière classique comprend la formation du conduit en plusieurs parties, par exemple une partie centrale pratiquement rectiligne et deux parties d'extrémité emboîtées ou fixées d'une autre manière sur cette partie centrale. Une telle solution est manifestement coûteuse puisqu'elle nécessite la manipulation de plusieurs pièces et des opérations spécifiques de montage.

Une autre possibilité comprend le dégagement de larges ouvertures dans la poutre métallique pour l'insertion du conduit. Cependant, cette solution a l'inconvénient de réduire la résistance mécanique de la poutre métallique, et n'est donc pas en général envisageable.

Une autre solution qui pourrait être envisagée est de ne fermer le canal délimité par la poutre métallique qu'après la mise en place du conduit. Cependant, comme cette mise en place est réalisée avant les opérations finales de soudage de la poutre qui dégagent une quantité importante de chaleur, le conduit est détérioré. Cette solution n'est donc pas utilisée en pratique.

Une autre solution qui pourrait être envisagée est d'utiliser un conduit très souple qui est déformable et peut être introduit facilement par pliage. Une telle solution a cependant l'inconvénient de nécessiter la fixation du conduit à la poutre, en particulier au niveau des ouvertures, soit par collage, soit par emboîtement dans des dispositifs spécifiques, et la partie centrale du conduit n'est alors pas tenue et risque de créer du bruit par vibration et choc contre la traverse.

L'invention a donc pour objet la réalisation d'une traverse aéraulique dans laquelle des conduits de forme sinueuse occupent la plus grande partie au moins du volume délimité par la poutre, sans cependant que ces conduits soient souples au point de nécessiter l'ajout de dispositifs de raccordement ou des opérations supplémentaires de fixation qui pourraient augmenter le coût de la traverse.

A cet effet, l'invention concerne des conduits ayant des propriétés spécifiques de déformabilité telles qu'ils conservent une rigidité suffisante pour se maintenir d'eux-mêmes dans l'espace de la poutre métallique, tout en donnant une section de passage importante.

Selon l'invention, un conduit peut occuper un état de travail dans lequel il occupe un volume pratiquement congruent de celui qui est délimité dans la poutre métallique, et un état d'insertion dans lequel son volume et/ou sa sinuosité sont réduits, si bien que l'insertion du conduit dans la poutre est facile.

Plus précisément, l'invention concerne un conduit de traverse aéraulique destiné, à un état de travail, à occuper un volume enveloppe délimité dans une poutre métallique entre au moins deux ouvertures et ayant un axe longitudinal entre ces ouvertures, l'axe longitudinal suivant un trajet sinueux et le volume enveloppe n'étant pratiquement accessible que par les ouvertures. Selon l'invention, le conduit comprend un dispositif de déformation réversible entre l'état de travail dans lequel le conduit a un volume pratiquement congruent du volume enveloppe, et un état d'insertion dans lequel l'enveloppe du volume du conduit a un volume inférieur à celui du volume enveloppe.

Dans un mode de réalisation, à l'état d'insertion, l'enveloppe du volume du conduit a un volume inférieur à celui du volume enveloppe parce que la section du conduit est inférieure à une section correspondante du conduit à son état de travail.

Dans une variante, le dispositif de déformation réversible du conduit est un dispositif de contraction du conduit sur lui-même de sorte que sa section est inférieure à sa section correspondante à son état de travail. Par exemple, le dispositif de déformation réversible comprend des lignes de pliage longitudinal d'une paroi au moins du conduit.

Dans ce mode de réalisation, il est avantageux que le conduit soit muni d'un dispositif de maintien temporaire à son état d'insertion. Par exemple, le dispositif de maintien du conduit à son état d'insertion est choisi parmi un sac d'application de vide et un lien de fil.

Dans le premier mode de réalisation, le conduit possède de préférence un troisième état libre dans lequel son volume est supérieur à un volume congruent du volume enveloppe, de sorte que, à son état de travail, le conduit est comprimé dans le volume enveloppe délimité par la poutre d'une traverse aéraulique.

Dans un autre mode de réalisation, à l'état d'insertion, l'enveloppe du volume du conduit a un volume inférieur à celui du volume enveloppe parce que la sinuosité du conduit est inférieure à celle du conduit à son état de travail. Dans un exemple, il comporte au moins une partie articulée au niveau d'un changement de direction de l'axe d'allongement.

De préférence, le conduit comporte aussi un dispositif de maintien du conduit à l'état déployé.

De préférence, le conduit comporte, à une extrémité, un dispositif d'accrochage d'un dispositif de tirage.

L'invention concerne aussi un procédé de fabrication d'une traverse aéraulique qui comprend une poutre métallique, dont une partie au moins forme un profilé délimitant un canal, et au moins un conduit en matière peu conductrice de la chaleur, destiné à raccorder deux ouvertures entre lesquelles le conduit suit un trajet d'axe longitudinal sinueux entre les ouvertures en étant tenu sur la poutre afin qu'il ne puisse pas se déplacer par rapport à celle-cri sous l'action de vibrations, le procédé étant du type qui comprend la fabrication d'une poutre qui délimite un volume enveloppe continu de logement du conduit entre les deux ouvertures dont les axes ne sont pas alignés. Selon l'invention, le procédé comprend en outre :
la fabrication du conduit afin qu'il soit déformable de façon réversible entre au moins un état de travail dans lequel le volume extérieur d'une partie au moins du conduit est congruent dudit volume enveloppe entre les deux ouvertures, et un état d'insertion dans lequel l'enveloppe du volume extérieur du conduit a une section transversale à l'axe allongé qui est plus petite que celle du volume enveloppe,
la mise du conduit à son état d'insertion,
l'insertion du conduit dans la poutre par une ouverture de celle-ci, et
la mise du conduit à son état de travail.

Dans un mode d'exécution, le procédé comprend, avant l'insertion du conduit dans la poutre, l'application d'un dispositif de maintien du conduit à son état d'insertion, et l'opération de mise du conduit à son état de travail comprend l'enlèvement du dispositif de maintien. Dans une variante, la mise et le maintien du conduit à son état d'insertion comprennent l'application d'une dépression au conduit. Par exemple, l'application d'une dépression au conduit est réalisée par disposition du conduit dans un sac et création de vide dans le sac.

De préférence, l'opération d'insertion est réalisée par introduction dans la poutre, par une ouverture puis l'autre, d'un dispositif de tirage, par fixation d'une extrémité du conduit au dispositif de tirage, et par extraction du dispositif de tirage qui insère le conduit dans la poutre.

D'autres caractéristiques et avantages de l'invention seront mieux compris à la lecture de la description qui va suivre d'exemples de réalisation, faite en référence au dessin annexé sur lequel :
la figure 1 est une coupe d'une partie de traverse aéraulique représentant une poutre métallique et un conduit ;
la figure 2 est une coupe transversale du dispositif de la figure 1, représentant le conduit à deux états différents ;
la figure 3 est une vue en perspective illustrant un autre mode d'exécution du procédé de l'invention et un autre mode de réalisation de conduit ;
la figure 4 représente un autre mode de réalisation de conduit ;
la figure 5 est une vue en perspective d'une variante de dispositif du type représenté sur la figure 3 ;
la figure 6 est une vue en perspective avec des parties arrachées d'un autre mode de réalisation ; et
la figure 7 est une coupe schématique du dispositif de la figure 6 sous forme pliée.

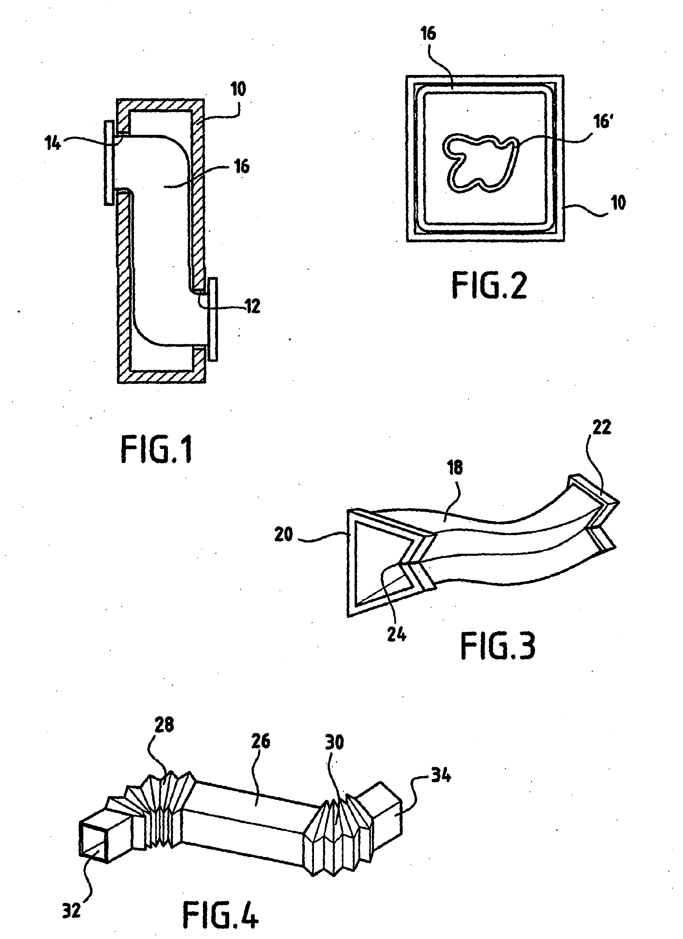

La figure 1 représente en coupe un tronçon de traverse aéraulique ayant une poutre métallique 10 qui délimite une partie de canal allongé. Deux ouvertures 12, 14 formées sur les côtés de la poutre métallique 10 sont destinées au passage d'un conduit 16. Comme on peut le noter par simple observation de la figure 1, si le conduit 16 est rigide, il n'est pas possible de l'insérer dans la poutre 10 par une ouverture à cause de sa forme sinueuse et du volume important qu'il occupe à l'intérieur de la poutre 10.

Selon l'invention, le conduit est réalisé en matériau suffisamment rigide pour que, lorsqu'il est en place, il garde sa forme et se maintienne en place de lui-même, sans nécessiter d'opérations spécifiques de raccordement, tout en possédant une déformabilité suffisante pour être inséré dans le canal de la poutre métallique 10 par l'une des ouvertures, jusqu'à l'autre ouverture.

Les figures 1 et 2 illustrent un premier mode de réalisation dans lequel le conduit est réalisé en un matériau ayant de bonnes propriétés de mémoire de forme, mais qui est cependant déformable sous l'action de forces suffisantes.

Par exemple, dans un mode de réalisation, le conduit 16 est formé d'un élastomère qui, à son état de travail, a un volume congruent de celui de la partie de canal de la poutre métallique 10 qu'il occupe dans celle-ci. Cependant, à un état déformé illustré en 16' sur la figure 2, la section du conduit peut être considérablement réduite.

Bien qu'on ait cité un élastomère pour la formation du conduit, il est possible d'utiliser d'autres matières, ayant notamment des propriétés de mémoire de forme. On peut citer des mousses thermoplastiques, telles des mousses de polyoléfines, notamment de polyéthylène, et des mousses à cellules ouvertes, par exemple de polyuréthanne, rendues étanches par un film.

La configuration de section réduite précitée peut être obtenue par disposition de l'ensemble du conduit dans un sac de matière plastique souple et par création du vide dans ce sac. De cette manière, le conduit est comprimé et peut ensuite être facilement introduit par l'ouverture 12 ou 14 jusqu'à l'ouverture 14 ou 12. Une extrémité du sac est alors coupée, et le sac est retiré par l'autre extrémité, si bien que le conduit 16 prend sa place automatiquement dans la poutre métallique 10.

Dans une autre variante du procédé, le conduit est contracté sur lui-même dans un outillage spécifique et est maintenu à cet état contracté par un fil de cerclage formant des boucles autour d'un fil longitudinal. Lorsque le fil longitudinal est retiré, les boucles libèrent le conduit qui reprend automatiquement sa forme et se positionne dans la poutre métallique grâce à ses propriétés de mémoire de forme .

La mise en place du conduit dans la poutre 10, surtout lorsque la longueur du conduit est importante, peut être facilitée à l'aide d'un outil ou dispositif de tirage qui est introduit par l'une des ouvertures 12, 14 jusqu'à l'autre ouverture, une extrémité du conduit étant alors accrochée à cet outil de tirage qui introduit le conduit jusqu'à l'autre ouverture, avant la suppression du dispositif de maintien.

La figure 3 représente un second mode de réalisation de conduit 18. Dans celui-ci, la section du conduit 18 est sensiblement rectangulaire, et la matière du conduit a été affaiblie au niveau d'une ligne 24 de pliage qui suit toute la longueur du conduit 18, entre deux flasques 20, 22 d'extrémité. Au niveau de la ligne de pliage 24, chaque flasque est de préférence aminci pour faciliter le pliage.

Bien qu'on n'ait représenté qu'une ligne de pliage d'un seul côté, il est évidemment préférable que le conduit possède plusieurs lignes de pliage pour permettre une réduction de volume plus importante et une insertion plus commode.

Comme dans le mode de réalisation des figures 1 et 2, le conduit 18 peut être tenu à son état contracté par application de vide ou par un dispositif de maintien temporaire.

La figure 4 représente un autre mode de réalisation de conduit 26 dans lequel la déformation du conduit est obtenue par réduction de la sinuosité. Plus précisément, le conduit comprend, dans les parties correspondant aux plus grands changements de direction de l'axe du conduit, des parties déformables 28, 30, représentées sous forme de soufflets. Ces parties 28, 30 permettent, à l'insertion, un meilleur alignement des deux parties d'extrémité 32, 34 destinées à se trouver dans les ouvertures. Dans ce cas, un dispositif de maintien à l'état déformé peut être superflu lorsque les soufflets 28 et 30 ont une souplesse suffisante.

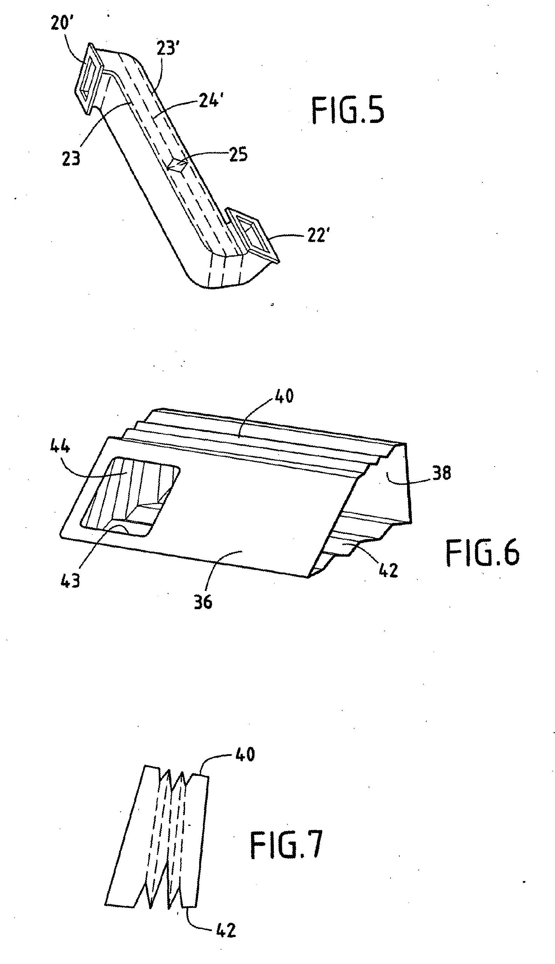

Le mode de réalisation de la figure 5 est une variante de celui de la figure 3, et on a utilisé des références analogues pour désigner les flasques d'extrémité 20' et 22' et la ligne de pliage 24' formée sur la longueur du conduit.

Dans ce mode de réalisation, entre des lignes de pliage 23 qui entourent la ligne de pliage 24' est disposé un renfort pliant 25. Plus précisément, lorsque le conduit doit être plié, le renfort transversal plié 25 est poussé avec le pli et se met à la forme de la partie adjacente du conduit. La poursuite de la poussée provoque le pliage du conduit qui s'écrase sur lui-même.

Lorsque le conduit a ensuite été déplié, les petites joues triangulaires qui délimitent le renfort 25 prennent naturellement une forme déployée vers l'extérieur, alors que le pli principal 24' reste légèrement plié vers l'intérieur. Le renfort 25 et la partie adjacente de conduit, par leurs orientations opposées, forment une structure qui résiste à l'écrasement du conduit. Le renfort 25 constitue ainsi un dispositif de maintien du conduit à l'état déployé.

Ce perfectionnement peut être apporté à tous les dispositifs dans lesquels une ligne de pliage sépare deux surfaces étendues.

Les figures 6 et 7 représentent un autre mode de réalisation dans lequel un conduit a des plis disposés dans la direction de sa longueur, comme dans le mode de réalisation de la figure 3, mais formant un pliage en accordéon tel qu'indiqué sur la figure 4.

Plus précisément, entre deux parois planes 36 et 38 sont disposées des parois plissées de liaison 40 et 42. A une extrémité au moins, une paroi plissée de fond 44 ferme le conduit. Une ouverture 43 de la paroi 36 forme une entrée ou une sortie du conduit. L'autre extrémité n'est pas représentée, car la représentation du conduit est arrachée afin que sa section déployée apparaisse clairement.

Comme l'indique aussi la figure 7 qui représente le dispositif de la figure 6 sous forme pliée, chacune des parois plissées 40, 42 comporte un plissement à trois arêtes internes. Les plis de la paroi 42 sont plus étendus que ceux de la paroi 40, si bien que, dans ce mode de réalisation, à l'état déployé, le conduit a une plus grande largeur à la partie inférieure qu'à la partie supérieure.

De préférence, le nombre d'arêtes de plis est le même dans les deux parois plissées 40 et 42, si bien que la paroi 44 peut être facilement plissée pour assurer la continuité des parois 40 et 42.

Bien qu' on ait représenté certains modes de réalisation particuliers seulement, l'invention s'applique de façon générale à des conduits qui peuvent être miss, par contraction ou déformation d'un autre type, à un volume plus petit que celui qui correspond au volume congruent de logement dans la poutre métallique de la traverse aéraulique, et qui peuvent revenir au volume de travail. On conçoit que, suivant les situations particulières, on puisse agir sur l'épaisseur locale du matériau du conduit pour favoriser localement la déformation du conduit en fonction de la forme particulière du volume de logement dans la traverse aéraulique 10.

## Revendications

1. T**raverse aéraulique comprenant un conduit (16, 18, 26) et une poutre métallique (10) comprenant au moins deux ouvertures (12, 14) formées sur les côtés de la poutre métallique (10), le** conduit de traverse aéraulique étant destiné, à un état de travail, à occuper un volume enveloppe délimité dans **la** poutre métallique (10) entre **les** au moins deux ouvertures (12, 14) et ayant un axe longitudinal entre ces ouvertures, l'axe longitudinal suivant un trajet sinueux et le volume enveloppe n'étant pratiquement accessible que par les ouvertures (12, 14), **caractérisée en ce que le conduit** comprend un dispositif de déformation réversible entre l'état de travail dans lequel le conduit (16, 18, 26) a un volume pratiquement congruent du volume enveloppe, et un état d'insertion dans lequel l'enveloppe du volume du conduit (16, 18, 26) a un volume inférieur à celui du volume enveloppe.

2. **Traverse aéraulique** selon la revendication 1, **caractérisée en ce que**, à l'état d'insertion, l'enveloppe du volume du conduit (16,18) a un volume inférieur à celui du volume enveloppe parce que la section du conduit (16, 18) est inférieure à une section correspondante du conduit à son état de travail.

3. **Traverse aéraulique** selon l'une des revendications 1 et 2, **caractérisée en ce que** le dispositif de déformation réversible du conduit est un dispositif de contraction du conduit (16, 18) sur lui-même de sorte que sa section est inférieure à sa section correspondante à son état de travail.

4. **Traverse aéraulique** selon la revendication 3, **caractérisée en ce que** le dispositif de déformation réversible comprend des lignes (24) de pliage longitudinal d'une paroi au moins du conduit (18).

5. **Traverse aéraulique** selon l'une quelconque des revendications 2 à 4, **caractérisée en ce que** le conduit (16, 18) est muni d'un dispositif de maintien temporaire à son état d'insertion.

6. **Traverse aéraulique** selon la revendication 1, **caractérisée ce que**, à l'état d'insertion, l'enveloppe du volume du conduit (26) a un volume inférieur à celui du volume enveloppe parce que la sinuosité du conduit (26) est inférieure à celle du conduit à son état de travail.

7. **Traverse aéraulique** selon la revendication 6, **caractérisée en ce que le conduit** comporte au moins une partie articulée (28, 30) au niveau d'un changement de direction de l'axe d'allongement.

8. Procédé de fabrication d'une traverse aéraulique **selon l'une quelconque des revendications précédentes, ladite traverse aéraulique comprenant** une poutre métallique (10) dont une partie au moins forme un profilé délimitant un canal, et au moins un conduit (16 , 18, 26) formé de matière peu conductrice de la chaleur, et destiné à raccorder deux ouvertures (12, 14) entre lesquelles le conduit (16, 18, 26) suit un trajet d'axe longitudinal sinueux entre les ouvertures en étant tenu sur la poutre (10) afin qu'il ne puisse pas se déplacer par rapport à celle-ci sous l'action de vibrations, le procédé étant du type qui comprend la fabrication d'une poutre (10) qui délimite un volume enveloppe continu de logement du conduit entre les deux ouvertures (12, 14) dont les axes ne sont pas alignés,
**caractérisé en ce qu'**il comprend :
la fabrication d'un conduit (16, 18, 26) déformable de façon réversible entre au moins un état de travail dans lequel le volume extérieur d'une partie au moins du conduit est congruent dudit volume enveloppe entre les deux ouvertures, et un état d'insertion dans lequel l'enveloppe du volume extérieur du conduit (16, 18, 26) a une section transversale à l'axe allongé qui est plus petite que celle du volume enveloppe,
la mise du conduit (16, 18, 26) à son état d'insertion, et
l'insertion du conduit (16, 18, 26) dans la poutre (10) par une ouverture (12, 14) de celle-ci,
la mise du conduit (16, 18, 26) à son état de travail.

9. Procédé selon la revendication 8, **caractérisé en ce qu'**il comprend, avant l'insertion du conduit (16, 18, 26) dans la poutre (10), l'application d'un dispositif de maintien du conduit à son état d'insertion, et **en ce que** l'opération de mise du conduit (16, 18, 26) à son état de travail comprend l'enlèvement du dispositif de maintien.

10. Procédé selon l'une des revendications 8 et 9, **caractérisé en ce que** l'étape d'insertion est réalisée par introduction dans la poutre (10), par une ouverture puis l'autre, d'un dispositif de tirage, par fixation d'une extrémité du conduit (16, 18, 26) au dispositif de tirage, et par extraction du dispositif de tirage qui insère le conduit (16, 18, 26) dans la poutre (10).

## Claims

1. Ventilation cross-piece comprising a duct (16, 18, 26) and a metal beam (10) comprising at least two openings (12, 14) formed in the sides of the metal beam (10), the ventilation cross-piece duct being designed, in a state of work, to occupy an envelope volume which is delimited in the metal beam (10) between the at least two openings (12, 14), and having a longitudinal axis between these openings, with the longitudinal axis following a sinuous trajectory, and the envelope volume being accessible in practice only via the openings (12, 14), **characterised in that** the duct comprises a device for reversible deformation between the state of work, in which the duct (16, 18, 26) has a volume which in practice is congruent with the envelope volume, and a state of insertion, in which the envelope of the volume of the duct (16, 18, 26) has a volume smaller than that of the envelope volume.

2. Ventilation cross-piece according to claim 1, **characterised in that**, in the state of insertion, the envelope of the volume of the duct (16, 18) has a volume smaller than that of the envelope volume, because the cross-section of the duct (16, 18) is smaller than a corresponding cross-section of the duct in its state of work.

3. Ventilation cross-piece according to one of claims 1 and 2, **characterised in that** the reversible deformation device of the duct is a device for contraction of the duct (16, 18) onto itself, such that its cross-section is smaller than its cross-section corresponding to its state of work.

4. Ventilation cross-piece according to claim 3, **characterised in that** the reversible deformation device comprises longitudinal folding lines (24) of at least one wall of the duct (18).

5. Ventilation cross-piece according to any one of claims 2 to 4, **characterised in that** the duct (16, 18) is provided with a device for temporary retention in its state of insertion.

6. Ventilation cross-piece according to claim 1, **characterised in that**, in the state of insertion, the envelope of the volume of the duct (26) has a volume smaller than that of the envelope volume, because the sinuosity of the duct (26) is smaller than that of the duct in its state of work.

7. Ventilation cross-piece according to claim 6, **characterised in that** the duct comprises at least one articulated part (28, 30) at the level of a change of direction of the axis of elongation.

8. Method for production of a ventilation cross-piece according to any one of the preceding claims, the said ventilation cross-piece comprising a metal beam (10), at least part of which forms a profile which delimits a channel, and at least one duct (16, 18, 26) formed of material which is a poor conductor of heat, and is designed to connect two openings (12, 14) between which the duct (16, 18, 26) follows a trajectory with a sinuous longitudinal axis between the openings, whilst being retained on the beam (10) so that it cannot be displaced relative to the latter under the action of vibrations, the method being of the type which comprises the production of a beam (10) which delimits a continuous envelope volume for accommodation of the duct between the two openings (12, 14), the axes of which are not aligned, **characterised in that** it comprises:
the production of a duct (16, 18, 26) which is deformable in a reversible manner between at least a state of work, in which the outer volume of at least part of the duct is congruent with the said envelope volume between two openings, and a state of insertion, in which the envelope of the outer volume of the duct (16, 18, 26) has a cross-section transverse to the elongate axis which is smaller than that of the envelope volume;
putting the duct (16, 18, 26) into its state of insertion; and
insertion of the duct (16, 18, 26) into the beam (10) via an opening (12, 14) in the latter;
putting the duct (16, 18, 26) into its state of work.

9. Method according to claim 8, **characterised in that** it comprises, before insertion of the duct (16, 18, 26) into the beam (10), the application of a device for retention of the duct in its state of insertion, and **in that** the operation of putting the duct (16, 18, 26) into its state of work comprises removal of the retention device.

10. Method according to one of claims 8 and 9,
**characterised in that** the step of insertion is carried out by means of introduction into the beam (10), via one opening then the other, of a pulling device, by securing of one end of the duct (16, 18, 26) to the pulling device, and by extraction of the pulling device which inserts the duct (16, 18, 26) into the beam (10).

## Patentansprüche

1. Lüftungsquerglied, mit einem Kanal (16,18,26) und einem Metallträger (10) mit zumindest zwei Öffnungen (12,14), die an den Rändern des Metallträgers (10) angebracht sind, welcher Kanal des Lüftungsquerglieds dazu vorgesehen ist, im Betriebszustand ein Volumen einzuschließen, das durch den Metallträger (10) zwischen den zumindest zwei Öffnungen (12,14) begrenzt wird und welcher eine Längsachse zwischen den Öffnungen aufweist, welche Längsachse einer Kurvenbahn folgt, wobei das eingeschlossene Volumen lediglich durch die Öffnungen (12,14) zugänglich ist, **dadurch gekennzeichnet, dass** der Kanal eine Einrichtung zur reversiblen Verformung zwischen dem Betriebszustand aufweist, in welchem der Kanal (16,18,26) ein Volumen aufweist, das praktisch gleich dem eingeschlossenen Volumen ist, und einem Einsetzzustand, in welchem das Volumen des Kanals (16,18,26) kleiner ist als das eingeschlossene Volumen.

2. Lüftungsquerglied gemäß Anspruch 1, **dadurch gekennzeichnet, dass** im Einsetzzustand das vom Kanal (16,18) umfasste Volumen kleiner ist als dasjenige des eingeschlossenen Volumens, weil der Querschnitt des Kanals (16,18) kleiner ist als ein entsprechender Querschnitt des Kanals im Betriebszustand.

3. Lüftungsquerglied gemäß einem der Ansprüche 1 oder 2, **dadurch gekennzeichnet, dass** die Einrichtung zur reversiblen Verformung des Kanals eine Einrichtung zur Kontraktion des Kanals (16,18) ist, derart, dass sein Querschnitt kleiner ist als der entsprechende Querschnitt im Betriebszustand.

4. Lüftungsquerglied gemäß Anspruch 3, **dadurch gekennzeichnet, dass** die Einrichtung zur reversiblen Verformung Längsfalten (24) in zumindest einer Wand des Kanals (18) umfasst.

5. Lüftungsquerglied gemäß einem der Ansprüche 2 bis 4, **dadurch gekennzeichnet, dass** der Kanal (16,18) mit einer Einrichtung zum temporären Halten desselben in seinem Einsetzzustand umfasst.

6. Lüftungsquerglied gemäß Anspruch 1, **dadurch gekennzeichnet, dass** im Einsetzzustand die Einhüllende des Volumens des Kanals (26) ein kleineres Volumen aufweist als das eingeschlossenes Volumen, weil die Krümmung des Kanals (26) kleiner ist als diejenige des Kanals im Betriebszustand.

7. Lüftungsquerglied gemäß Anspruch 6, **dadurch gekennzeichnet, dass** der Kanal zumindest einen Verbindungsteil (28,30) auf Höhe eines Richtungswechsels der Erstreckungsachse aufweist.

8. Verfahren zur Herstellung eines Lüftungsquerglieds gemäß einem der vorhergehenden Ansprüche, welches Lüftungsquerglied einen Metallträger (10) umfasst, von welchem zumindest ein Teil ein Profil bildet, das einen Kanal begrenzt, sowie zumindest einen Kanal (16,18,26) aus einem gering wärmeleitfähigen Material zur Verbindung von zwei Öffnungen (12,14), zwischen denen der Kanal (16,18,26) einer Bahn einer gewundenen Längsachse zwischen den Öffnungen folgt und auf dem Träger (10) derart gehalten wird, dass er nicht durch die Wirkung von Vibrationen lösbar ist, welches Verfahren die Herstellung eines Trägers (10) umfasst, der ein eingehülltes Volumen begrenzt, das zur Aufnahme des Kanals zwischen den zwei Öffnungen (12,14) dient, deren Achsen nicht aufeinander ausgerichtet sind,
**dadurch gekennzeichnet, dass** es die folgenden Schritte umfasst:
die Herstellung eines Kanals (16,18,26), der reversibel verformbar ist zwischen zumindest einem Betriebszustand, in welchem das äußere Volumen von zumindest einem Teil des Kanals gleich dem eingeschlossenen Volumen zwischen den zwei Öffnungen ist, und einem Einsetzzustand, in welchem die Einhüllende des äußeren Volumens des Kanals (16,18,26) einen Querschnitt der Längsachse aufweist, der kleiner ist als derjenige des eingeschlossenen Volumens,
das Bringen des Kanals (16,18,26) in seinem Einsetzzustand, und
das Einsetzen des Kanals (16,18,26) in den Träger (10) durch eine Öffnung (12,14) desselben,
und das Bringen des Kanals (16,18,26) in seinem Betriebszustand.

9. Verfahren gemäß Anspruch 8, **dadurch gekennzeichnet, dass** vor dem Einsetzen des Kanals (16,18,26) in den Träger (10) eine Einrichtung zum Halten des Kanals in seinem Einsetzzustand angebracht wird, und dass das Bringen des Kanals (16,18,26) in seinen Betriebszustand das Entfernen der Halteeinrichtung umfasst.

10. Verfahren gemäß einem der Ansprüche 8 oder 9, **dadurch gekennzeichnet, dass** der Schritt des Einsetzens erfolgt durch die Einführung in den Träger (10) durch eine Öffnung nach der anderen durch eine Zieheinrichtung zur Befestigung eines Endes des Kanals (16,18,26) an der Zieheinrichtung und durch Ziehen der Zieheinrichtung, die den Kanal (16,18,26) einsetzt, in den Träger (10).
